# EUROPÄISCHE PATENTSCHRIFT

(11) **EP 2 400 637 B1**
(45) Veröffentlichungstag und Bekanntmachung des Hinweises auf die Patenterteilung: **25.07.2018**
(21) Anmeldenummer: 11167751.4
(22) Anmeldetag: 26.05.2011
(51) Int. Cl.: H02K 3/50

(54) **Elektromotor**
Electric motor
Moteur électrique

(30) Priorität: 23.06.2010 DE 102010025261
(43) Veröffentlichungstag der Anmeldung: 28.12.2011
(73) Patentinhaber: C. & E. Fein GmbH, 73529 Schwäbisch Gmünd-Bargau (DE)
(72) Erfinder: Dietl, Lothar, 73563 Mögglingen (DE); Hokenmaier, Tobias, 73098 Rechberghausen (DE); Maier, Christoph, 73274 Notzingen (DE)
(74) Vertreter: Roos, Michael

(56) Entgegenhaltungen:
- EP-A1- 0 993 095
- EP-A2- 1 050 948
- WO-A1-02/087057
- WO-A1-2006/050765
- WO-A1-2009/139067

## Beschreibung

Die Erfindung betrifft einen Elektromotor, insbesondere einen elektrisch kommutierbaren Motor für ein Handwerkzeug, mit einem Stator mit einer Mehrzahl von Erregerwicklungen, die zumindest abschnittsweise aus einem Wickeldraht gewickelt sind, mit einem Kontaktgitter zur Kontaktierung der Erregerwicklungen, das eine Mehrzahl von einander isolierter Leiterbahnen aufweist, wobei die Leiterbahnen Kontakte aufweisen, an denen der Wickeldraht festgelegt ist.

Die Erfindung betrifft ferner ein Verfahren zur Fertigung eines Elektromotors.

Ein derartiger Elektromotor ist aus der WO 2002/087057 A1 bekannt.

Bei dem bekannten Elektromotor handelt es sich um einen elektronisch kommutierten Gleichstrommotor mit einem Stanzgitter, auf dem Steckstifte, Wicklungsphasen, Leistungsanschlüsse sowie Anschlüsse weiterer Bauteile kontaktiert sind. Das Stanzgitter weist eine obere Gitterlage und eine untere Gitterlage auf, die jeweils eine Anzahl Kontakte umfassen.

Mit einem derartigen Stanzgitter kann eine kompakte Bauweise des Elektromotors unterstützt werden. Es hat sich jedoch gezeigt, dass die Herstellung und insbesondere die Handhabung der Gitterlagen derartiger Stanzgitter besonders aufwendig sind, wenn eine Mehrzahl verschiedener Kontakte bei einer Gitterlage realisiert werden soll. Dies resultiert letztlich in Kontaktbereichen, welche im Laufe der Fertigung vollständig von anderen Bereichen der jeweiligen Gitterlage getrennt werden müssen, um hierfür eine Isolierung bewirken zu können.

Aus der DE 38 10 963 C2 ist ein Gitter aus elektrisch leitendem Blechmaterial zur Kontaktierung eines Elektromotors sowie ein Verfahren zur Herstellung eines Gitters bekannt.

Das bekannte Gitter ist ein Tiefziehteil, das becher- oder topfförmig oder aber halbrundschalenförmig ausgebildet ist und elektrisch voneinander getrennte Leiterbahnen aufweist, die jedoch im Rahmen der Fertigung oder Verarbeitung des Gitters erst getrennt werden müssen, um die Isolation zu gewährleisten. Auch dabei ist grundsätzlich eine aufwendige Herstellung, Handhabung und Verarbeitung erforderlich.

Aus der WO 02/087057 A1 ist ein Elektromotor gemäß dem Oberbegriff von Anspruch 1 bekannt, bei dem ein Stanzgitter zur Verschaltung der einzelnen Wicklungen miteinander vorgesehen ist. Die Wicklungen können durchgehend gewickelt werden und an vorbestimmten Punkten unterbrochen werden, um die gewünschte Verschaltung zu erreichen. Zur Kontaktierung der Wicklungen werden Schneidklemmen oder Anschlussfahnen verwendet. Halbleiterschalter zur Steuerung des Elektromotors sind in Taschen an einem Isolierkörper des Stanzgitters gehalten.

Aus der WO 2006/050765 A1 ist ein weiterer Elektromotor mit einem Stanzgitter zur Verschaltung der einzelnen Wicklungen bekannt. Am Stanzgitter sind geeignete Formelemente vorgesehen, um eine Kontaktierung mit den Wicklungen zu erlauben, z.B. durch Verschweißen. Einzelne der Wicklungen können unterbrochen werden, um die gewünschte Verschaltung zu erreichen.

Aus der EP 0 993 095 A1 ist ein Elektromotor mit einem Stator bekannt, wobei eine Verschaltungsanordnung zur Verschaltung der Wicklungen in Form einer Mehrfach-Kontaktkammer vorgesehen, die durch Teilkammern mit einer wickelkopfseitig aufgesetzten Verdrahtungsplatte gekoppelt sind.

Aus der EP 1 050 948 A2 ist ein Elektromotor mit einem Stator bekannt, bei dem zur Verschaltung der Wicklungen elektrisch gegeneinander isolierte Verbindungsleiter verwendet werden, die konzentrisch zueinander angeordnet werden und die relativ zueinander mittels Isolierschichten aus Isolierpapier gehalten sind.

Aus der WO 2009/139067 A1 ist ein Elektromotor bekannt, bei dem zur Verbindung der einzelnen Wicklungen miteinander mehrere teilkreisförmige Verbinder vorgesehen sind, die in relativ komplizierter Weise am Stator gehalten und mit den Wicklungen verbunden sind.

Vor diesem Hintergrund ergibt sich die Aufgabe der Erfindung, einen Elektromotor, insbesondere einen elektronisch kommutierbaren Motor für ein Handwerkzeug, sowie ein Verfahren zur Herstellung eines Elektromotors anzugeben, der in einfacher, automatisierbarer Weise herstellbar und montierbar ist, bei dem eine sichere Kontaktierung gerade auch bei einer Vielzahl von Erregerwicklungen gewährleistet ist und der möglichst bei hoher Leistungsfähigkeit eine kompakte Bauform aufweisen kann. Außerdem soll eine sichere Positionierung sowohl bezüglich des Stators als auch bezüglich einer zugeordneten Motorsteuerung gewährleistet sin.

Diese Aufgabe wird bei durch einen Elektromotor gemäß Anspruch 1 gelöst.

Die Aufgabe der Erfindung wird ebenso gelöst durch ein Verfahren zur Herstellung eines Elektromotors gemäß Anspruch 13.

Die Aufgabe der Erfindung wird auf diese Weise gelöst.

Erfindungsgemäß ergibt sich nämlich bei dem Elektromotor eine besonders einfache Verschaltung der Erregerwicklungen, die in überraschender Weise gewissermaßen als Nebenprodukt des Wickelns anfällt. Ferner wird durch das zur Verschaltung verwendete Kontaktgitter eine Positionierung sowohl gegenüber dem Stator als auch gegenüber einer zugeordneten Motorsteuerung durch Nasen am Kontaktgitter gewährleistet.

Nach einem Wickelvorgang, bei dem die Erregerwicklungen etwa vollständig aus einem Wickeldraht gewickelt sind, erlaubt das gezielte Trennen einzelner Abschnitte des Wickeldrahtes in Bereichen zwischen der Kontaktierung verschiedener Erregerwicklungen eine gezielte Zuordnung dieser Erregerwicklungen zu einzelnen Leiterbahnen. Somit entfallen aufwendige Zwischenschritte. Der Elektromotor weist bereits nach dem Festlegen des Wickeldrahtes an den Kontakten des Kontaktgitters eine hohe mechanische Stabilität auf, so dass der Aufwand zur Fixierung und Sicherung bestimmter zu montierender Komponenten deutlich reduziert werden kann.

Indem der Wickeldraht, mit dem die Erregerwicklungen gewickelt sind, an den Kontakten der Leiterbahnen festgelegt ist, ergibt sich ebenso eine Festlegung des Kontaktgitters am Stator, so dass auf eine separate Befestigung des Kontaktgitters verzichtet werden kann. Auch dadurch verringert sich der Herstellungs- und Montageaufwand erheblich.

Erfindungsgemäß sind einige Nasen zur Ausrichtung der Motorsteuerung gegenüber dem Kontaktgitter und andere Nasen zur Ausrichtung des Kontaktgitters gegenüber dem Stator ausgebildet.

Hierbei ergibt sich unter Nutzung des Kontaktgitters eine mittelbare Ausrichtung der Motorsteuerung gegenüber dem Stator. Die Formelemente am Kontaktgitter sind zum Zusammenwirken mit dem Stator, ebenso auch zum Zusammenwirken mit der Motorsteuerung ausgebildet. Dabei können einzelne Formelemente die Ausrichtung des Kontaktgitters gegenüber dem Stator und andere Formelemente die Ausrichtung der Motorsteuerung gegenüber dem Kontaktgitter vorgeben. Die Nasen können ferner als Zentrierelemente, ebenso auch als Anschlagflächen dienen.

Die direkte Kontaktierung der Leiterbahnen mit dem Wickeldraht ohne "Flaschenhals" kann dabei großflächig erfolgen. Zur weiteren Stromführung können die Leiterbahnen große stromführende Querschnitte aufweisen, so dass insgesamt ohmsche Verluste bei der Kontaktierung der Erregerwicklungen verringert werden können. Damit einhergehend kann die Leistungsfähigkeit des Elektromotors erhöht und die Verlustleistung in Form von Wärmeabgabe verringert werden.

Gemäß einer weiteren Ausgestaltung des erfindungsgemäßen Elektromotors sind die Leiterbahnen aus einem flachen leitfähigen Halbzeug gestanzt oder geschnitten.

Auf diese Weise kann die Festigkeit der Leiterbahnen in beträchtlichem Maße erhöht werden, ebenso können die Leitungsverluste durch große Querschnitte stromführender Bereiche weiter reduziert werden.

Die Leiterbahnen können alternativ oder zusätzlich unter Nutzung von Tiefziehprozessen und/oder Biegeprozessen hergestellt sein.

Die einzelnen Leiterbahnen weisen dabei etwa nur die Kontakte einer Phase oder des Sternpunkts einer Schaltung auf. Dabei können aufwendige Herstellungsschritte, insbesondere komplexe Trenn- und Umformvorgänge vermieden werden, wie es bei Leiterbahnen erforderlich ist, bei denen eine Mehrzahl voneinander isolierter Leitungen vorgesehen ist, die etwa erst im Rahmen eines zusätzlichen Fertigungsschrittes bei der Weiterverarbeitung endgültig voneinander getrennt werden können.

Die Leiterbahnen erlauben ferner die Verwendung zumindest ähnlicher Werkzeuge, Halbzeuge, Zwischenprodukte oder Matrizen. Es ergeben sich etwa bei einem dreiphasigen Motor mit einer Sternschaltung insgesamt vier zumindest ähnliche Leiterbahnen.

Zur weiteren Verringerung des Herstellungsaufwands ist es bevorzugt, wenn zumindest einige der Leiterbahnen identisch sind oder aus identischen Halbzeugen, insbesondere Stanzrohlingen, gefertigt sind.

Gemäß einem weiteren Aspekt der Erfindung weisen die Leiterbahnen einen im Wesentlichen ringförmigen Grundkörper auf, von dem Arme abstehen, an denen die Kontakte ausgebildet sind.

Durch diese Maßnahme kann sich ein etwa sternförmiger Aufbau ergeben, bei dem jeder Arm einer Leiterbahn dazu ausgebildet ist, jeweils eine Erregerwicklung einer gleichen Phase zu kontaktieren.

Das Kontaktgitter kann nun in einfacher Weise einen Stapel von Leiterbahnen aufweisen, bei denen die Grundkörper hintereinander angeordnet sind und die Arme zu einer vorgelagerten Leiterbahn oder einer nachgelagerten Leiterbahn jeweils um einen gewissen Betrag versetzt sind.

Die Möglichkeit zur Aufnahme am Grundkörper vereinfacht Montage und Handhabung, da die Leiterbahnen in diesem Bereich eine hohe Stabilität aufweisen. Die Herstellung kann sich noch weiter vereinfachen.

Gemäß einer Weiterbildung der Erfindung sind die Kontakte zum Klemmen und/oder Fügen zur Festlegung des Wickeldrahtes ausgebildet.

Hierdurch kann sich eine besonders gute Kontaktierung des Wickeldrahtes über einen Kraftschluss und/oder über einen Stoffschluss ergeben. Mit der Festlegung des Wickeldrahtes an den Kontakten geht ebenso die Festlegung des Kontaktgitters am Stator einher. Mit nur einem Ablauf von Fügevorgängen kann somit eine Mehrzahl von Bauteilen montiert bzw. angeschlossen werden.

Insbesondere bei einem stoffschlüssigen Fügeverfahren zum Kontaktieren des Wickeldrahtes kann durch thermische Einwirkungen eine Isolierung des Wickeldrahtes entfernt werden.

Es versteht sich, dass neben Schweißverfahren auch Verfahren zum Löten oder Bonden zum thermischen Fügen zur Anwendung gelangen können. Ebenso kann der Wickeldraht direkt oder indirekt gefügt sein, also etwa direkt verlötet oder aber zwischen zwei miteinander verschweißten Schenkeln eines Kontaktes geklemmt sein.

Gemäß einem weiteren Aspekt der Erfindung sind vier Leiterbahnen vorgesehen, von denen drei Leiterbahnen jeweils zur Kontaktierung einer Phase der Erregerwicklungen ausgebildet sind und die vierte Leiterbahn als Kontakt eines Sternpunkts ausgebildet ist.

Auf diese Weise kann eine funktionale Trennung der Leiterbahnen voneinander erfolgen, so dass keine direkten Kontakte der Leiterbahnen untereinander erforderlich sind.

Bei einem elektronisch kommutierbaren Elektromotor, der mit einem Dreiphasen-Wechselfeld in Dreieckschaltung angesteuert wird, weist das Kontaktgitter hingegen vorzugsweise drei Leiterbahnen auf, von denen jede genau eine der Phasen kontaktiert.

Gemäß einer weiteren Ausgestaltung der Erfindung weist das Kontaktgitter eine Trägerstruktur, insbesondere eine zumindest partielle Kunststoffumspritzung, auf.

Durch diese Maßnahme kann die Handhabung während der Herstellung und Montage erheblich vereinfacht werden. Derart ausgestaltet, weist das Kontaktgitter eine hohe Unempfindlichkeit gegenüber äußeren Kräften auf.

Die Kunststoffumspritzung kann ebenso zur Isolation der einzelnen Leiterbahnen im Kontaktgitter genutzt werden. Sind dabei etwa vier Leiterbahnen übereinander gestapelt, so kann sich insgesamt ein ausgesprochen festes Bauteil ergeben. Die großen Querschnitte der Leiterbahnen sorgen dabei für geringe thermische Verluste, so dass auch bei einer zumindest partiellen Kunststoffumspritzung ein Wärmestau oder dergleichen im Kontaktgitter vermieden werden kann.

Ein Vergießen der zueinander ausgerichteten Leiterbahnen, etwa mit Kunststoff oder einem Gießharz, vereinigt die Leiterbahnen und kann dabei deren Relativlage zueinander sichern sowie eine Isolation der Leiterbahnen voneinander bewirken.

Gemäß einer Weiterbildung der Erfindung weist das Kontaktgitter ferner Kontakte zum Direktkontaktieren der Motorsteuerung auf.

Auf diese Weise kann der Elektromotor hochintegriert ausgeführt sein. Kurze Leitungswege ermöglichen ausgesprochen niedrige Leitungsverluste.

Somit kann sich eine kompakte Baugruppe ergeben, die zumindest den Stator, das Kontaktgitter und die Motorsteuerung umfasst. Insbesondere bei einem elektronisch kommutierten Motor ist im Inneren des Motors, also bei einem Rotor, nur mit einer geringen Wärmeentwicklung zu rechnen, so dass auch bei einer den Erregerwicklungen benachbarten Motorsteuerung nicht mit einer negativen Beeinflussung durch Wärmeabgabe des Motors gerechnet werden muss.

Sind darüber hinaus ohnehin Maßnahmen zur Wärmeabführung vom Elektromotor getroffen, so kann damit auch Abwärme der Motorsteuerung abgeführt werden.

Ferner kann es bevorzugt sein, einzelne oder alle Formelemente unsymmetrisch zu gestalten und/oder unsymmetrisch am Kontaktgitter anzuordnen, um die Gefahr von Fehlmontagen weiter zu verringern.

Gemäß einer Weiterbildung der Erfindung sind die Vorsprünge am Kontaktgitter zur Führung und Umlenkung des Wickeldrahtes ausgebildet.

Der Wickeldraht kann dabei beispielsweise an einem Umfang der Vorsprünge umgelenkt sein, wohingegen eine Höhe der Vorsprünge dazu dient, einen Anschlag bei der Montage des Kontaktgitters oder benachbarter Teile zu definieren.

Somit können weitere Funktionen in das Kontaktgitter integriert werden, ohne dass weitere Komponenten erforderlich sind. Insgesamt kann sich die Herstellung des Elektromotors dadurch erheblich vereinfachen.

In zweckmäßiger Weiterbildung der Erfindung weist das Kontaktgitter eine Öffnung mit einem freien Durchgang, insbesondere einem Innendurchmesser, sowie einen Außendurchmesser auf, wobei ein Innendurchmesser-Außendurchmesser-Verhältnis von etwa 1:1,5 bis 1:2,5, vorzugsweise von 1:1,8 bis 1:2,0 vorgesehen ist.

Auf diese Weise kann im Rahmen der Fertigung etwa ein Rotor oder eine Motorwelle durch das Kontaktgitter hindurch dem Stator zugeführt werden. Der Stator kann gemeinsam mit dem Kontaktgitter als kompakte Einheit vormontiert werden, ohne nachfolgende Montageschritte zu erschweren.

Der verbliebene Leitungsquerschnitt der einzelnen Leiterbahnen erlaubt dabei weiterhin eine verlustarme Leitung hoher Ströme. Ebenso ist die sich ergebende Ringform des Grundkörpers massiv genug, um die mechanische Stabilität der Leiterbahnen zu gewährleisten.

Gemäß einer Weiterbildung dieser Ausgestaltung entspricht der Innendurchmesser im Wesentlichen einem Innendurchmesser des Stators des Elektromotors und beträgt etwa 15 bis 30 mm, vorzugsweise 18 bis 24 mm, weiter bevorzugt ungefähr 22 mm.

Es versteht sich, dass der freie Durchgang für den Rotor nicht unbedingt kreisförmig ausgebildet sein muss. Gleichwohl ist eine zumindest im Wesentlichen kreisförmige Öffnung bevorzugt, da derartige Geometrien insbesondere mittels Stanzverfahren oder Schnittverfahren einfach gefertigt werden können.

Gemäß einem weiteren Aspekt der Erfindung sind die Erregerwicklungen durchgehend aus dem Wickeldraht gewickelt.

Gerade bei dieser Ausgestaltung zeigen sich die Vorteile der Kontaktierung über das Kontaktgitter in hohem Maße. Der Wickeldraht kann, ohne zwischendurch gekappt zu werden, vollständig um sämtliche Erregerwicklungen des Stators gewickelt werden. In seiner Endgestalt an bestimmten Positionen zwischen Kontakten verschiedener Leiterbahnen getrennt, kann sich so eine einfache Verschaltung auch komplexer Elektromotoren mit hohen Polpaarzahlen und vielen miteinander verschalteten Erregerwicklungen ergeben.

Es versteht sich dabei, dass die durchgehende Wicklung zeitlich sowohl kontinuierlich als auch diskontinuierlich erfolgen kann. Pausen können sich etwa bei einer prozessbedingten Verlagerung des zu bewickelnden Stators oder einer Wickelvorrichtung ergeben.

Gemäß einer Weiterbildung der Erfindung sind zumindest einige der Erregerwicklungen parallel geschaltet.

Bei einem Handwerkzeug kann ein erfindungsgemäßer Elektromotor besonders vorteilhaft zum Einsatz gelangen.

Das Handwerkzeug kann ein Werkzeug zum Bohren, Schrauben, Schlagbohren, Sägen, Schleifen oder Polieren sein. Elektronisch kommutierte Elektromotoren weisen regelmäßig eine Steuereinrichtung zur Erzeugung eines Drehfeldes auf bzw. werden von einer Steuereinrichtung angesteuert. Die Steuereinrichtung wird dabei im Regelfall mit Gleichstrom versorgt. Insofern ist es bevorzugt, wenn das Handwerkzeug eine Energieversorgungseinrichtung, insbesondere einen Akkumulator aufweist.

Das erfindungsgemäße Verfahren zur Herstellung eines Elektromotors kann ferner durch den Schritt des Klemmens und/oder Fügens der Leiterbahn an den Kontakten zur Festlegung des Wickeldrahtes und des Kontaktgitters weitergebildet sein.

Gemäß einem weiteren Aspekt des erfindungsgemäßen Verfahrens weist die Fertigung des Kontaktgitters die folgenden Schritte auf:
- Beabstandetes Anordnen und Ausrichten der Mehrzahl von Leiterbahnen in einer Relativlage zueinander; und
- Vergießen, insbesondere Umspritzen, der Mehrzahl von Leiterbahnen zur Erzeugung einer Trägerstruktur.

Auf diese Weise ergibt sich eine Stützstruktur für das Kontaktgitter, die nachfolgende Handlingschritte und Fertigungsvorgänge erheblich vereinfachen kann. Darüber hinaus kann die Trägerstruktur Gestaltelemente aufweisen, die das Zuführen sowie die Montage des Kontaktgitters erleichtern. Die Eignung zur hochautomatisierten Fertigung wird weiter verbessert. Ferner kann durch das Vergießen ein Isolieren der Leiterbahnen voneinander bewirkt werden.

Insbesondere bei Verwendung eines Kontaktgitters mit einem freien Durchgang, etwa einem Innendruchmesser, der im Wesentlichen einem inneren Aufnahmedurchmesser des Stators entspricht, kann ein Rotor im Rahmen des weiteren Fertigungsablaufs einfach durch das Kontaktgitter hindurch dem Stator zugeführt werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine schematische Darstellung eines Handwerkzeugs mit einem erfindungsgemäßen Elektromotor;
- Fig. 2: ein vereinfachtes Schaltbild einer Sternparallelschaltung zur Erzeugung eines Drehfeldes bei einem erfindungsgemäßen Elektromotor;
- Fig. 3: eine alternative schematische Darstellung der Schaltung gemäß Fig. 2 mit einer angedeuteten Kontaktierung;
- Fig. 4: ein erfindungsgemäßes Kontaktgitter mit einer Mehrzahl übereinander angeordneter Leiterbahnen in perspektivischer Darstellung;
- Fig. 5: das Kontaktgitter gemäß Fig. 4 mit einer Trägerstruktur in Form einer Umspritzung;
- Fig. 6: eine Schnittansicht des Kontaktgitters gemäß Fig. 5;
- Fig. 7: eine vergrößerte gebrochene Darstellung eines Details gemäß Fig. 6;
- Fig. 8: eine vereinfachte schematische Darstellung eines erfindungsgemäßen Stators mit einer Wickelanordnung;
- Fig. 9: eine vergrößerte gebrochene Ansicht eines Kontakts mit einem Wickeldraht in geöffneter Position;
- Fig. 10: eine Ansicht gemäß Fig. 9, bei der der Wickeldraht durch den Kontakt festgelegt ist;
- Fig. 11: eine perspektivische Darstellung eines erfindungsgemäßen Stators mit einer Wickelanordnung;
- Fig. 12: eine Aufsicht des Stators gemäß Fig. 11;
- Fig. 13: eine perspektivische Darstellung einer Anordnung des Stators gemäß Fig. 11 mit dem Kontaktgitter gemäß Fig. 5; und
- Fig. 14: eine perspektivische Darstellung der Anordnung gemäß Fig. 13, bei der ferner eine Motorsteuerung berücksichtigt ist.

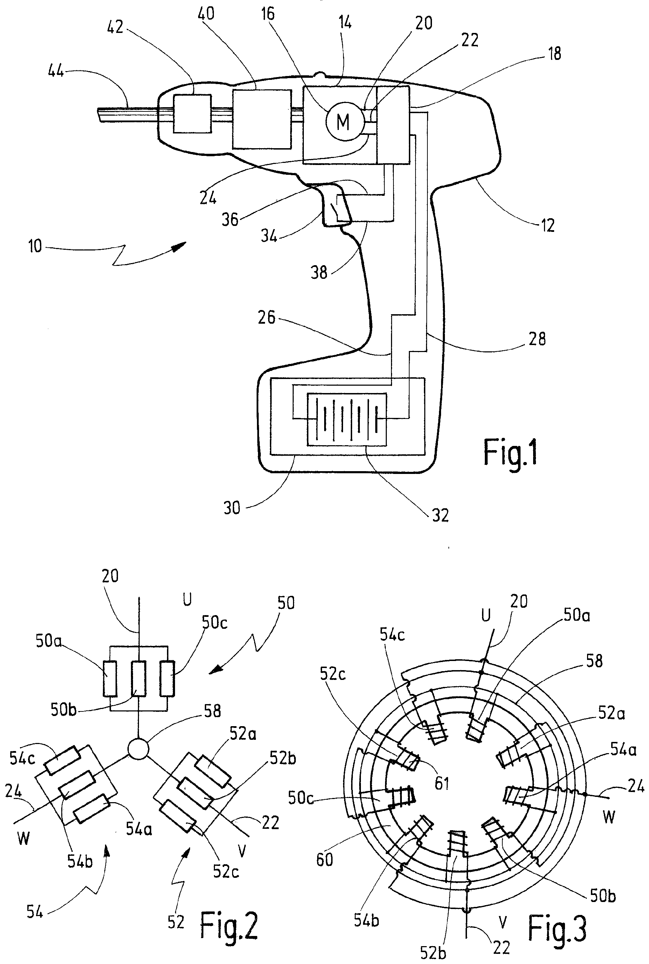

In Fig. 1 ist ein Handwerkzeug schematisch dargestellt und insgesamt mit 10 bezeichnet.

Das Handwerkzeug 10 weist ein Gehäuse 12 auf, in dem ein Antrieb 14 mit einem Elektromotor 16 und einer Motorsteuerung 18 aufgenommen ist. Beispielhaft weist der Elektromotor 16 drei Kontakte 20, 22, 24 auf, über die etwa drei Wicklungsphasen U, V, W bestromt werden können. Es kann sich dabei also um einen mit einem Drehfeld beaufschlagten und mit einem permanenterregten Rotor versehenen Elektromotor handeln.

Die Motorsteuerung 18 ist dazu ausgebildet, die Phasen des Motors U, V, W mit dem Wechselfeld zu beaufschlagen. Diese Art der Erregung kann eine elektronische Kommutation sein. Das Wechselfeld kann dabei einen sinusförmigen Verlauf aufweisen, blockförmig ausgebildet sein oder aber einen pulsweitenmodellierten blockförmigen Signalverlauf aufweisen, mit dem etwa ein sinusähnlicher Verlauf approximiert werden kann.

Die Motorsteuerung 18 ist über Versorgungsleitungen 26, 28 mit einer Energieversorgungseinrichtung 30 gekoppelt. Gemäß der Darstellung in Fig. 1 kann die Energieversorgungseinrichtung 30 einen Akkumulator 32 aufweisen, der die Motorsteuerung 18 über die Versorgungsleitungen 26, 28 mit Gleichstrom versorgt.

Gleichwohl kann die Motorsteuerung 18 mit externen Energieversorgungseinrichtungen, etwa Netzteilen oder Gleichrichtern, verbunden sein.

Bei einem Griffbereich des Gehäuses 12 des Handwerkzeugs 10 ist ein Schalter 34 vorgesehen, über den ein Bediener das Handwerkzeug 10 aktivieren kann. Der Schalter 34 ist über Signalleitungen 36, 38 mit der Motorsteuerung 18 gekoppelt.

Der Antrieb 14 ist zum Antreiben eines Werkzeugs 44 ausgebildet. Dem Antrieb 14 sowie dem Werkzeug 44 können etwa ein Getriebe 40 zur Anpassung von Drehzahl, Drehmoment oder Drehrichtung, oder eine Kupplung 42 zwischengeschaltet sein. Die Kupplung 42 kann Mittel zum Aufnehmen und Auswechseln verschiedener Werkzeuge aufweisen. Darüber hinaus kann die Kupplung 42 dazu ausgebildet sein, etwa bei einem zu hohen Drehmoment oder Drehmomentanstieg den Kraftschluss zwischen dem Antrieb 14 und dem Werkzeug 44 zu trennen, um den Antrieb 14 oder das Getriebe 40 vor Überlastungen zu schützen.

Das Handwerkzeug 10 ist vorliegend als Akkubohrer bzw. Akkuschrauber ausgebildet. Die gezeigten Komponenten können jedoch ohne Weiteres auch in Handwerkzeugen mit oszillierendem Abtrieb, etwa Stichsägen oder Pendelhubstichsägen, mit drehoszillierendem Abtrieb, etwa Oszillationsschleifern oder Oszillationssägen, ebenso auch bei vielen anderen zu weiteren Zwecken geeigneten Handwerkzeugen zur Verwendung gelangen.

Fig. 2 zeigt eine beispielhafte Anordnung von Erregerwicklungen 50, 52, 54, die beim Elektromotor 16 zur Erzeugung des Drehfeldes zur Verwendung kommen können. Die einzelnen Phasen U, V, W sind den Kontakten 20, 22, 24 zugeordnet. Jeder der Phasen U, V, W ist eine Parallelschaltung von drei Erregerwicklungen zugeordnet. Die Phase U kann über den Kontakt 20 angesteuert werden und ist mit den parallel geschalteten Erregerwicklungen 50a, 50b, 50c versehen. Die Phase V ist über den Kontakt 22 ansteuerbar und weist eine Parallelschaltung der Erregerwicklungen 52a, 52b, 52c auf. Die dritte Phase W ist mit dem Kontakt 24 sowie den drei parallel geschalteten Erregerwicklungen 54a, 54b, 54c versehen.

Die derart verschalteten Erregerwicklungen 50, 52, 54 sind ferner über einen Kontakt 58 in Form eines Sternpunkts miteinander verschaltet. In Fig. 2 ist bereits angedeutet, dass der Sternpunkt räumlich nicht lediglich punktförmig ausgebildet sein muss, sondern zur Anpassung an gegebene Bauraumbedingungen durchaus eine flächige oder räumliche Erstreckung aufweisen kann.

Es versteht sich, dass die Erregerwicklungen 50, 52, 54 auch dreieckförmig verschaltet sein können. Ebenso ist es denkbar, dass die gemäß Fig. 2 in den einzelnen Phasen U, V, W realisierten Parallelschaltungen auch als Reihenschaltung oder aber als Einzelwicklung umgesetzt sein können. Infolge ergeben sich bei einer Mehrzahl von Erregerwicklungen 50, 52, 54 pro Phase U, V, W grundsätzlich vier Konfigurationen, die ggf. durch Hinzuschalten oder Abschalten von Einzelwicklungen weiter variiert werden können. Es handelt sich dabei im Wesentlichen um eine Sternschaltung in Serie, eine Sternparallelschaltung, eine Dreieckschaltung in Serie sowie um eine Dreieckparallelschaltung.

Auf diese Weise kann mit nur einer Ausgangskonfiguration eine große Bandbreite möglicher erzielbarer Drehzahlen und Drehmomente abgedeckt werden.

Fig. 3 zeigt eine alternative schematische Darstellung der Wicklungsanordnung aus Fig. 2. Die Wicklungen der einzelnen Phasen U, V, W sind dabei an einem Stator 60 aufgenommen. Der Stator 60 ist ringförmig ausgebildet und weist sich radial nach innen erstreckende Stege auf, die als Klauen 61 der einzelnen Erregerwicklungen 50a, 50b, 50c, 52a, 52b, 52c, 54a, 54b, 54c ausgebildet sind. Zur Vermeidung von Wirbelströmen kann der Stator 60 ein Paket aus mehreren Lagen von Statorblechen aufweisen (in Fig. 3 nicht dargestellt).

Die parallel miteinander verschalteten Erregerwicklungen der einzelnen Phasen U, V, W sind dabei versetzt angeordnet, so dass sich insgesamt eine Abfolge der Erregerwicklungen 50a-52a-54a-50b-52b-54b-50c-52c-54c ergibt. Ein Ende einer jeden Erregerwicklung ist dabei mit dem gemeinsamen Sternkontakt 58 gekoppelt. Das jeweilig andere Ende der Erregerwicklungen 50a, 50b, 50c ist mit dem Kontakt 20, also der Phase U, verknüpft. Das jeweilig andere Ende der Erregerwicklungen 52a, 52b, 52c ist mit dem Kontakt 22, also der Phase V, gekoppelt. Schließlich ist das jeweilig andere Ende der Erregerwicklungen 54a, 54b, 54c mit dem Kontakt 24, also der Phase W, gekoppelt.

Bereits aus der einfachen schematischen Darstellung in Fig. 3 ist ersichtlich, dass eine Sternparallelschaltung der Erregerwicklungen 50, 52, 54 an einem realen Stator 60 einen hohen Aufwand verursachen kann.

Im Rahmen der Erfindung wird ein Kontaktgitter benutzt, das dazu beitragen kann, die Fertigung des Elektromotors 16 zu vereinfachen und insbesondere den Verschaltungsaufwand für die Erregerwicklungen 50, 52, 54 deutlich zu reduzieren.

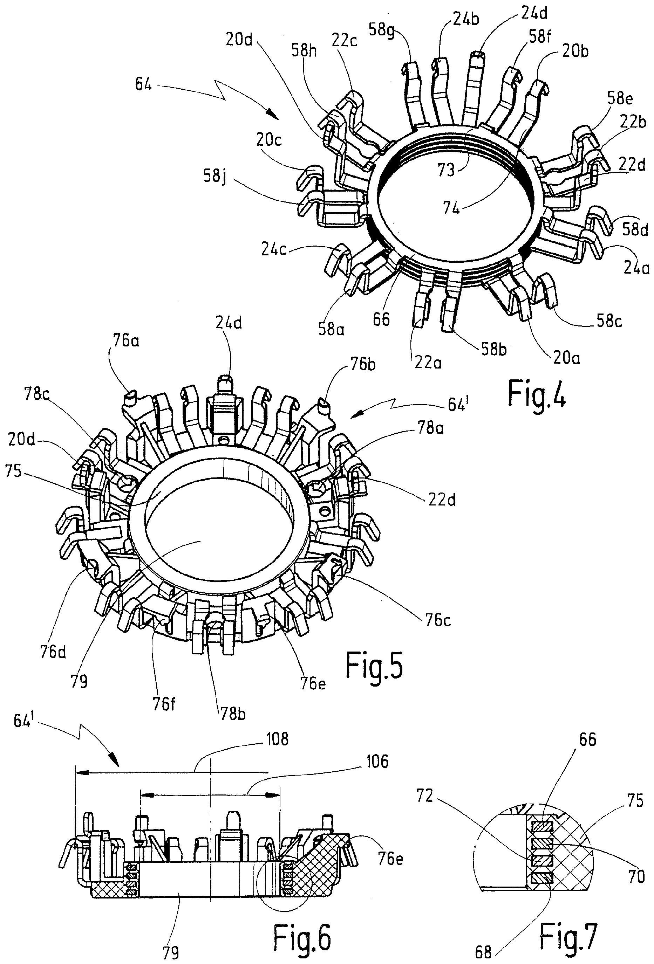

Ein solches Kontaktgitter wird anhand der Fig. 4 bis 7 näher erläutert.

Fig. 4 zeigt ein mit 64 bezeichnetes Kontaktgitter in einem Zustand ohne Umspritzung. Das Kontaktgitter 64 weist eine Mehrzahl von Leiterbahnen 66, 68, 70, 72 auf, die voneinander isoliert sind.

Die Leiterbahnen 66, 68, 70, 72 weisen einen Grundkörper 73 auf, der etwa ringförmig ausgebildet sein kann. Vom Grundkörper 73 erstreckt sich eine Mehrzahl von Armen 74 radial nach außen. An den Armen 74 können dabei die Kontakte 20, 22, 24, 58 ausgebildet sein. Vorzugsweise werden die Leiterbahnen 66, 68, 70, 72 aus einem flachen leitfähigen Halbzeug gestanzt. Es kann sich dabei etwa um ein Stanzbiegen handeln, so dass bereits mit dem Stanzen die Endkontur der Arme 74 mit den Kontakten 20, 22, 24, 58 erzeugt werden kann. Alternativ kann das Stanzen lediglich der Erzeugung eines flachen, sternförmigen Halbzeugs dienen, bei dem sich nachfolgend weitere Umformvorgänge im Bereich der Arme 74 anschließen.

Aus Fig. 4 wird deutlich, dass die Leiterbahnen 66, 68, 70, 72 eine zumindest ähnliche Kontur oder Geometrie aufweisen, so dass zumindest bei einigen Fertigungsschritten Synergien genutzt werden können.

Die Leiterbahn 66 verkörpert den Sternpunkt und ist mit den Kontakten 58a, 58b, 58c, 58d, 58e, 58f, 58g, 58h, 58j versehen, von denen jeder der Kontaktierung einer einzelnen Erregerwicklung 50a, 50b, 50c, 52a, 52b, 52c, 54a, 54b, 54c, etwa gemäß Fig. 3, dient.

An die Leiterbahn 66 schließt sich die Leiterbahn 70 an, vergleiche Fig. 7. Die Leiterbahn 70 dient der Kontaktierung der Phase V und weist die Kontakte 22a, 22b, 22c auf, die mit den Erregerwicklungen 52a, 52b, 52c koppelbar sind. Der weitere Kontakt 22d dient der Verbindung nach außen, etwa zur Motorsteuerung 18.

Demnach weist die Leiterbahn 66, die den Sternpunkt verkörpert insgesamt neun Kontakte auf, die der Zahl der einzelnen Erregerwicklungen entsprechen. Die Leiterbahn 70 für die Phase V verfügt hingegen über vier Kontakte, von denen die drei Kontakte 22a, 22b, 22c der Kontaktierung der drei der Phase V zugehörigen Erregerwicklungen 52a, 52b, 52c dienen. Der vierte Kontakt 22d verkörpert den Anschluss, über den die Motorsteuerung 18 die Phase V ansteuert.

Aus Fig. 7 ergibt sich, dass sich an die Leiterbahn 70 die Leiterbahnen 72 und 68 anschließen. Die Leiterbahn 72 dient der Verschaltung der der Phase W zugehörigen Erregerwicklungen 54a, 54b, 54c und ist hierzu mit den Kontakten 24a, 24b, 24c versehen. Der Kontakt 24d dient der Kopplung nach außen und der Ansteuerung durch die Motorsteuerung 18. Die Leiterbahn 68 gewährleistet die Verschaltung der der Phase U zugeordneten Erregerwicklungen 50a, 50b, 50c. Die Erregerwicklung 50a kann dabei etwa über den Kontakt 20a, die Erregerwicklung 50b über den Kontakt 20b und die Erregerwicklung 50c über den Kontakt 20c kontaktiert sein. Schließlich weist auch die Leiterbahn 68 einen weiteren Kontakt, den Kontakt 20d auf, der mit der Motorsteuerung 18 verbindbar ist.

Die Arme 74 der Leiterbahnen 66, 68, 70, 72 können etwa durch einfaches Abkanten oder verwandte Umformvorgänge erzeugt sein. Sie weisen ausgehend vom Grundkörper 73 Übergangsbereiche mit Übergangsradien, im Wesentlichen gerade Flachstücke, die etwa parallel oder senkrecht zum Grundkörper ausgebildet sein können, und daran anschließend eine hakenförmige Kontaktgeometrie auf. Insbesondere bei den Kontakten 20d, 22d, 24d, ist alternativ eine Kontaktstruktur in Form einer Steckerzunge berücksichtigt.

Ein Stapel bzw. ein Paket aus Leiterbahnen 66, 68, 70, 72 kann einfach durch Aufnahme am Grundkörper 73, zueinander Ausrichten der Grundkörper 73 verschiedener Leiterbahnen 66, 68, 70, 72 sowie Bewirken einer bestimmten Drehlage der Leiterbahnen 66, 68, 70, 72 zueinander bewerkstelligt werden.

Vorteilhaft weisen danach zumindest einige der Kontakte 20, 22, 24, 58 eine gleiche Höhenlage bzw. Axiallage auf. Sie sind dabei grundsätzlich in Ebenen angeordnet, die parallel zu den Grundkörpern 73 verlaufen. Eine derartige Ausgestaltung kann nachfolgende Fertigungsschritte, insbesondere das Kontaktieren und Verschalten, deutlich vereinfachen.

In den Fig. 5 bis 7 ist das Kontaktgitter in einem umspritzten Zustand dargestellt und mit 64' bezeichnet.

Beim Umspritzen wird das Paket der Leiterbahnen 66, 68, 70, 72 mit einer Trägerstruktur 75 versehen, die im Regelfall aus einem Kunststoff besteht. Dabei kann auf einfache Weise sowohl eine gewünschte elektrische Isolation als auch eine Verbesserung der mechanischen Stabilität sowie der Handhabbarkeit des Kontaktgitters 64' bei der Fertigung bewirkt werden.

Auch nach dem Umspritzen mit der Trägerstruktur 75 weist das Kontaktgitter 64' eine zentrale Öffnung 79 auf, die etwa ringförmig oder kreisförmig ausgestaltet sein kann. Die Öffnung 79 erleichtert Montagevorgänge und kann der Aufnahme und Fixierung des Kontaktgitters 64' während der Fertigung dienen. Bei einem fertig montierten Elektromotor 16 kann die Öffnung 79 etwa von einer mit dem Rotor verbundenen Motorwelle durchgriffen sein.

Die Öffnung 79 weist einen freien Innendurchmesser 106 auf. In Fig. 6 ist ferner mit 108 ein Außendurchmesser des Kontaktgitters 64' angedeutet, der im Wesentlichen durch die Kontakte (20, 22, 24, 58) der seitlich abstehenden Arme (74) bestimmt ist.

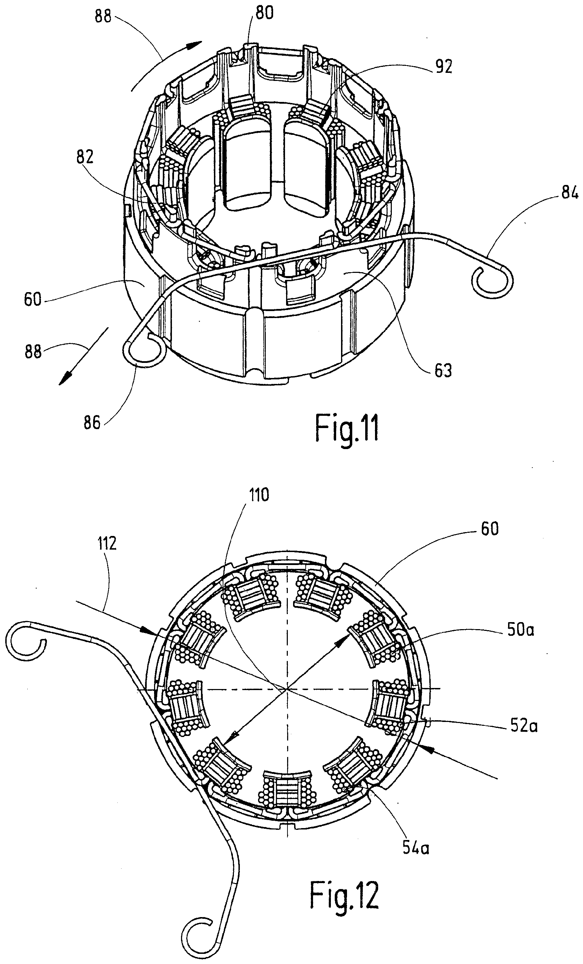

Bei kompakten Hochleistungsmotoren können der Innendurchmesser vorteilhaft etwa 15 bis 30 mm, vorzugsweise 18 bis 24 mm, weiter bevorzugt ungefähr 22 mm, und der Außendurchmesser vorteilhaft etwa 35 bis 60 mm, vorzugsweise 40 bis 45 mm, weiter bevorzugt ungefähr 42 mm betragen. Der Innendurchmesser 106 orientiert sich dabei an einem Innendurchmesser 110 des Stators 60 und der Außendurchmesser 108 an einem Außendurchmesser 112 des Stators 60, vergleiche auch Fig. 12. Insgesamt kann dabei ein kompakter Elektromotor mit einer hohen Leistungsdichte ermöglicht werden.

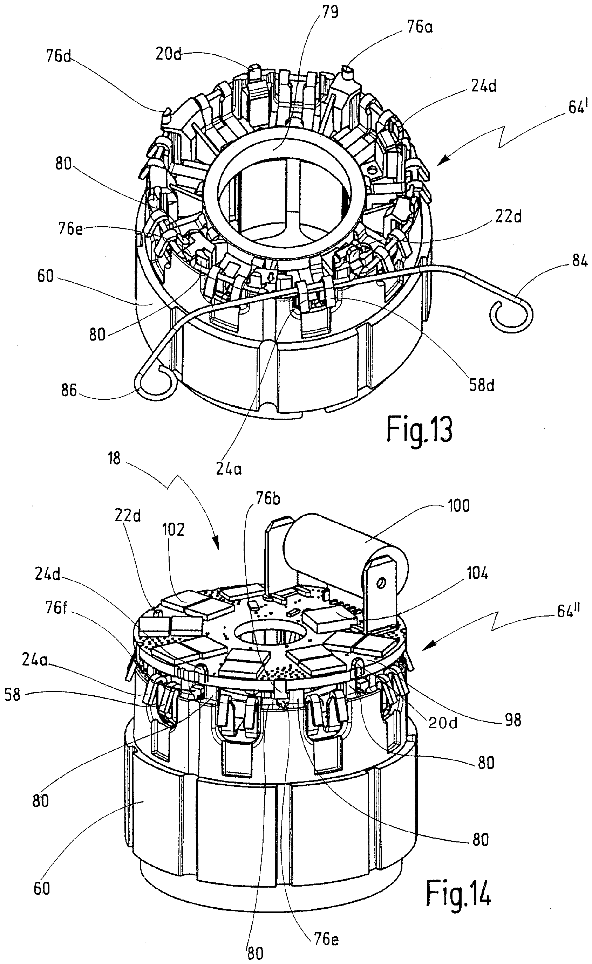

Neben der Erhöhung der mechanischen Stabilität sowie der elektrischen Isolation kann die Trägerstruktur 75 auch Gestaltelemente zur weiteren Montagevereinfachung enthalten. Dabei kann es sich etwa um Nasen 76a, 76b, 76c, 76d handeln, die vorliegend als Zylindersegmente, etwa Halbzylinder, mit axialer Erstreckung an der Trägerstruktur 75 aufgenommen sind. Ferner weist das Kontaktgitter 64 Ausnehmungen 78a, 78b, 78c auf, die etwa während der Fertigung oder im montierten Zustand von Aufnahmestiften durchgriffen sein können. Ebenso sind Nasen 76e, 76f angedeutet, die sich von der Trägerstruktur 75 radial nach außen erstrecken und etwa eine winklige Zuordnung des Kontaktgitters 64' gegenüber dem Stator 60 ermöglichen, vergleiche Fig. 13 und Fig. 14.

Ein Querschnitt der Nase 76e ist ferner in Fig. 6 angedeutet.

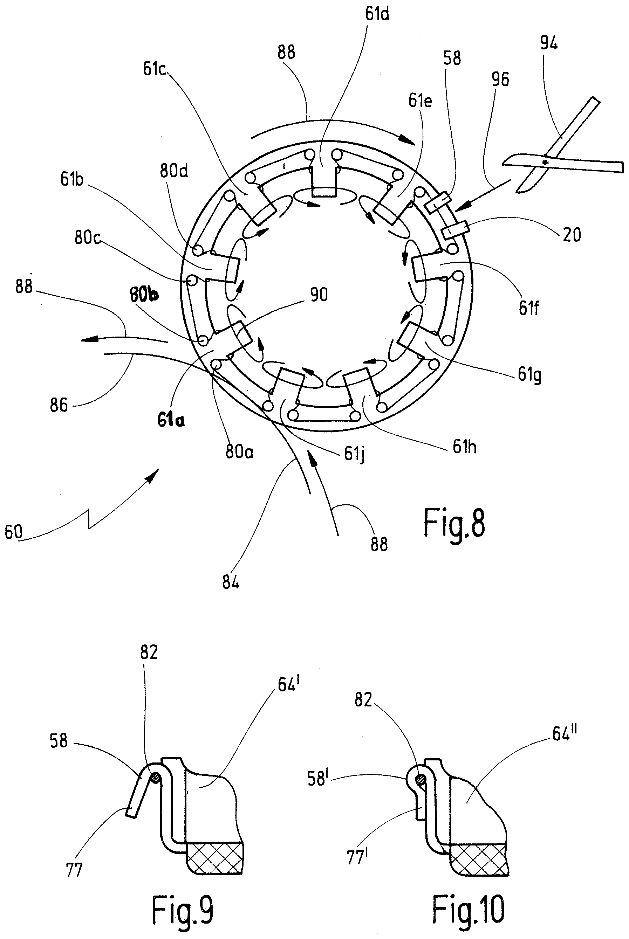

Fig. 8 zeigt eine schematische Darstellung des Stators 60 und verdeutlicht insbesondere die Erzeugung der Anordnung der Erregerwicklungen 50, 52, 54, die etwa in Fig. 3 angedeutet ist.

Am Stator 60 ist eine Mehrzahl von Klauen 61 vorgesehen, die jeweils den Kern einer Erregerwicklung 50, 52, 54 darstellen. Einer jeden Klaue 61 sind dabei zwei Vorsprünge 80 zugeordnet, die der Umlenkung eines Wickeldrahtes 82 dienen.

Der Wickelvorgang startet ausgehend von einem mit 84 bezeichneten Anfang des Wickeldrahtes 82. Die grobe Wickelrichtung ist durch mit 88 bezeichnete Pfeile angedeutet. Zunächst wird der Draht ausgehend vom Anfang 84 um den Vorsprung 80a bei der ersten Klaue 81a herumgeführt. Es schließt sich das Bewickeln der ersten Klaue 61a an. Der Wickelsinn um die Klauen 61 wird durch einen mit 90 bezeichneten Pfeil angedeutet. Nach dem Bewickeln der Klaue 61a erfolgt ein Umlenken des Wickeldrahtes 82 um den Vorsprung 80b in Richtung auf den Vorsprung 80c bei der sich anschließenden Klaue 61b. In weiterer Folge werden sämtliche Klauen 61a-61j umwickelt. Zum Ende des Wickelvorgangs kreuzt der Wickeldraht 82 beim Weg auf das mit 86 angedeutete Wickelende den Anfang 84 des Wickeldrahtes.

Auf diese Weise ist ein Bewickeln des Stators 60 mit einem durchgängigen Wickeldraht 82 ermöglicht. Es bietet sich insbesondere ein kontinuierliches Bewickeln an. Zum Ende des Wickelvorgangs liegen nunmehr sämtliche Erregerwicklungen 50, 52, 54 in Reihe verschaltet vor. Diese Konfiguration ist noch nicht zur Erzeugung eines Drehfeldes für einen elektronisch kommutierbaren Elektromotor geeignet.

In Fig. 8 sind vereinfacht mit 20 und 58 zwei der Kontakte angedeutet, zwischen denen erfindungsgemäß eine Trennung des Wickeldrahtes 82 zu erfolgen hat, um eine Verschaltung der Anordnung der Erregerwicklungen 50, 52, 54 etwa gemäß Fig. 3 zu erzielen. Dieser Vorgang erfolgt nach dem Zuführen des Kontaktgitters 64' zum Stator 60.

Der bewickelte Stator 60 erhält demnach nach dem Zuführen des Kontaktgitters 64 eine Konfiguration, bei der einfach mittels Trennen des Wickeldrahtes 82 etwa an einer durch einen mit 96 bezeichneten Pfeil angedeuteten Position mittels eines Trennwerkzeugs 94 (schematisch stark vereinfacht dargestellt) die beabsichtigte Verschaltung bewirkt werden kann. Bei der in Fig. 8 gezeigten Ausgestaltung sind hierfür insgesamt neun Trennvorgänge erforderlich.

In Fig. 9 ist ein vereinfachter Ausschnitt des Kontaktgitters 64 gemäß Fig. 6 im Bereich des Kontakts 58 dargestellt. Ferner ist mit 82 der Wickeldraht angedeutet. Es versteht sich, dass die gezeigte Konfiguration erst nach Zuführen des Kontaktgitters 64' zum Stator 60 ermöglicht ist, vergleiche Fig. 13 und Fig. 14. Auf nähere Darstellung des Stators 60 wurde in den Fig. 9 und 10 verzichtet.

Der Kontakt 58 gemäß Fig. 9 weist die Gestalt eines Hakens 77 auf, der geöffnet ist und den Wickeldraht 82 zwischen zwei Schenkeln des Hakens 77 aufgenommen hat.

In Fig. 10 ist der Haken 77' geschlossen, so dass sich eine Festlegung des Wickeldrahtes 82 am nunmehr geschlossenen Kontakt 58' ergibt. Das Schließen des Hakens 77' kann etwa mechanisch durch Quetschen oder Klemmen, oder aber stoffschlüssig durch Schweißen, Löten oder Bonden erfolgen. Bevorzugt ist dabei ein Verschweißen der Schenkel des Hakens 77. Sind alle Kontakte 20, 22, 24, 58 geschlossen, so ergibt sich für das Kontaktgitter ein mit 64" bezeichneter Zustand, in dem das Kontaktgitter 64" am Stator 60 festgelegt ist. Das Schließen der Kontakte 20, 22, 24, 58 bewirkt folglich sowohl das Kontaktieren des Wickeldrahtes 82 als auch eine Lagesicherung des Kontaktgitters 64".

In Zusammenhang mit Fig. 8 ist ersichtlich, dass der nunmehr etwa zwischen den Kontakten 20 und 58 festgelegte Wickeldraht 82 genügend fixiert ist, um mit dem Trennwerkzeug 94, wie durch den Pfeil 96 angedeutet, zwischen den Kontakten 20 und 58 durchtrennt werden zu können. Es versteht sich dabei, dass es bevorzugt ist, den Wickeldraht 82 dabei nicht lediglich zu trennen, sondern ferner beim Trennvorgang derart Material abzutragen oder aber sich ergebende Enden des Wickeldrahtes 82 derart umzuformen, dass sich ein hinreichend großer Trennabstand ergibt. Somit ist nach dem Trennvorgang eine gute Isolation gewährleistet.

In weiterer Folge wird der Wickeldraht 82 zwischen jeweils zwei der Klauen 61 durchtrennt, so dass sich eine Verschaltung gemäß Fig. 3 ergeben kann.

In den Fig. 11 und 12 ist der umwickelte Stator 60 dargestellt. Aus Vereinfachungsgründen wurde dabei auf eine vollständige Darstellung des Verlaufs des Wickeldrahtes 82 verzichtet. Der grobe Wickelsinn ist anhand der Pfeile 88 zu erkennen.

Wie bereits angedeutet, ist es besonders bevorzugt, wenn sämtliche Erregerwicklungen 50, 52, 54 zunächst durchgängig aus dem Wickeldraht 82 gewickelt sind. Ebenso ist vorstellbar, dass etwa nur Abschnitte der Erregerwicklungen 50, 52, 54 durchgängig bewickelt sind. Auch bei dieser Konfiguration kann sich unter Nutzung des Kontaktgitters 64 eine einfache, mit geringem Aufwand herstellbare Verschaltung ergeben.

Der Stator 60 weist im Regelfall eine Mehrzahl axial hintereinander angeordneter Statorbleche auf. Die Statorbleche sind in geeigneter Weise von den Erregerwicklungen 50, 52, 54 isoliert.

Der Stator 60 weist ferner eine zumindest partielle Umspritzung 63 auf, die die Statorbleche fixieren sowie die Isolation bewirken kann. Vorteilhaft sind dabei die Vorsprünge 80 als Teil der Umspritzung 63 ausgeführt.

Ausgehend von dem in den Fig. 11 und 12 dargestellten Zustand zeigt Fig. 13 eine Konfiguration, bei der das Kontaktgitter 64' dem Stator 60 zugeführt ist. Dabei greift etwa die Nase 76e in einen Bereich zwischen zwei Vorsprüngen 80 am Stator 60 ein und unterstützt die Lagefestlegung. Während die zur Kontaktierung mit den Erregerwicklungen 50, 52, 54 vorgesehenen Kontakte bereits im Eingriff mit diesen stehen, ragen die Kontakte 20d, 22d, 24d, die zur Kontaktierung der Motorsteuerung 18 vorgesehen sind, nach oben aus dem Zusammenbau heraus.

Aus Fig. 12 sind ferner der Innendurchmesser 110 und der Außendurchmesser 112 des Stators 60 ersichtlich. Innerhalb des Innendurchmessers 110 kann unter Beachtung des Luftspalts eine Motorwelle mit einem Rotor aufgenommen werden. Da sich der Innendurchmesser 106 des Stanzgitters 64' (vgl. Fig. 6) am Innendurchmesser 110 des Stators 60 orientiert, kann der Rotor auch bei bereits montiertem Stanzgitter 64' durch die Öffnung 79 zugeführt werden. Ebenso zeigt Fig. 13, dass das Stanzgitter 64' umfangsseitig nicht oder zumindest nicht wesentlich über den Stator 60 hinausragt, da der Außendurchmesser 108 des Stanzgitters 64' am Außendurchmesser 112 des Stators 60 orientiert ist. Es kann sich somit eine kompakte, etwa patronenartige, Bauform für den Elektromotor 16 und insgesamt für den Antrieb 14 ergeben.

Basierend auf dem in Fig. 13 gezeigten Zustand ermöglicht eine Festlegung des Wickeldrahtes 82 an den Kontakten 20, 22, 24, 58 sowohl die Kontaktierung als auch die Lagesicherung des Kontaktgitters 64' gegenüber dem Stator 60. Analog zu den Fig. 9 und 10 kann dabei die Festlegung etwa mittels Verschweißen erfolgen. Zwischen jeweils zwei der Kontakte, etwa zwischen den Kontakten 24a und 58d, kann nun der Wickeldraht 82 durchtrennt werden, wie anhand Fig. 8 bereits erläutert. Insbesondere auf einer Rundtaktmaschine kann sich dabei ein einfaches, schnelles Kontaktieren ergeben.

Vorteilhaft wird der Anfang 84 des Wickeldrahts 82 während des gesamten Wickelvorgangs und werden der Anfang 84 und das Ende 86 des Wickeldrahtes nach dem Wickelvorgang zunächst vorrichtungsseitig fixiert, um den korrekten Verlauf des Wickeldrahtes 82 zu gewährleisten. Nach dem Fügevorgang und dem Durchtrennvorgang zum Kontaktieren können nicht mehr benötigte Bestandteile des Wickeldrahtes 82 gelöst werden.

In Fig. 14 ist ausgehend von Fig. 13 der Stator 60 mit dem Kontaktgitter 64" sowie der Motorsteuerung 18 gezeigt. Aus Vereinfachungsgründen wird dabei auf die Darstellung des fertig gewickelten Wickeldrahtes 82, der zwischen Paaren der Kontakte 20, 22, 24 mit den Kontakten 58 durchtrennt ist, sowie auf die Darstellung der verformten Haken 77' der Kontakte 20, 22, 24 und 58 verzichtet. Dies kann ohne Weiteres den Fig. 8 und 10 entnommen werden.

Die Motorsteuerung 18 weist eine Leiterplatte 98 auf, an der etwa ein Kondensator 100, eine Mehrzahl von Leistungsschaltern 102 sowie ein Prozessor oder eine Logik 104 zur Steuerung aufgenommen sein können. Die Kontaktierung der Leiterplatte mit dem Kontaktgitter 64" erfolgt über die Kontakte 20d, 22d, 24d. Die Nasen 76a, 76b, 76c, 76d ermöglichen dabei eine Ausrichtung der Motorsteuerung 18 gegenüber dem Stator 60 und dem Kontaktgitter 64". Die axiale Lagezuordnung der Leiterplatte 98 der Motorsteuerung 18 gegenüber dem Stator erfolgt über die Vorsprünge 80.

Insgesamt kann sich so eine äußert kompakte, leistungsfähige Bauform des Elektromotors 16 ergeben, die sich darüber hinaus durch einfache Herstellbarkeit und hohe Eignung zur automatisierten Fertigung auszeichnet.

## Patentansprüche

1. Elektromotor, insbesondere elektronisch kommutierbarer Motor für ein Handwerkzeug, mit einem Stator (60) mit einer Mehrzahl von Erregerwicklungen (50, 52, 54), die aus einem Wickeldraht (82) gewickelt sind, mit einem Kontaktgitter (64) zur Kontaktierung der Erregerwicklungen (50, 52, 54), das eine Mehrzahl voneinander isolierter Leiterbahnen (66, 68, 70, 72) aufweist, wobei die Leiterbahnen (66, 68, 70, 72) Kontakte (20, 22, 24, 58) aufweisen, an denen der Wickeldraht (82) festgelegt ist, wobei der Wickeldraht (82) zwischen bestimmten Kontakten (20, 22, 24, 58) derart durchtrennt ist, dass sich eine Verschaltung der Erregerwicklungen (50, 52, 54) in einer Sternschaltung oder einer Dreiecksschaltung ergibt, die zum Erzeugen eines Drehfeldes geeignet ist, wobei das Kontaktgitter (64) Formelemente, in Form von Nasen (76), Ausnehmungen (78) oder Vorsprüngen (80) zur Handhabung und Montagevereinfachung aufweist, wobei das Kontaktgitter (64) Kontakte (20d, 22d, 24d) zum Kontaktieren einer Motorsteuerung (18) aufweist, **dadurch gekennzeichnet, dass** einige der Formelemente als Nasen (76a, 76b, 76c, 76d) zur Ausrichtung der Motorsteuerung (18) gegenüber dem Kontaktgitter (64) und einige der Formelemente als Nasen (76e, 76f) zur Ausrichtung des Kontaktgitters (64) gegenüber dem Stator (60) ausgebildet sind.

2. Elektromotor nach Anspruch 1, **dadurch gekennzeichnet, dass** die Leiterbahnen (66, 68, 70, 72) aus einem flachen leitfähigen Halbzeug gestanzt oder geschnitten sind.

3. Elektromotor nach Anspruch 1 oder 2, **dadurch gekennzeichnet, dass** die Leiterbahnen (66, 68, 70, 72) einen im Wesentlichen ringförmigen Grundkörper (73) aufweisen, von dem Arme (74) abstehen, an denen die Kontakte (20, 22, 24, 58) ausgebildet sind.

4. Elektromotor nach einem der vorhergehenden Ansprüche, **dadurch gekennzeichnet, dass** die Kontakte (20, 22, 24, 58) zum Klemmen und/oder Fügen zur Festlegung des Wickeldrahtes (82) ausgebildet sind.

5. Elektromotor nach einem der vorhergehenden Ansprüche, **dadurch gekennzeichnet, dass** vier Leiterbahnen (66, 68, 70, 72) vorgesehen sind, von denen drei Leiterbahnen (68, 70, 72) jeweils zur Kontaktierung einer Phase (U, V, W) der Erregerwicklungen (50, 52, 54) ausgebildet sind und die vierte Leiterbahn (66) als Kontakt (58) eines Sternpunkts ausgebildet ist.

6. Elektromotor nach einem der vorhergehenden Ansprüche, **dadurch gekennzeichnet, dass** das Kontaktgitter (64) eine Trägerstruktur (75), insbesondere eine zumindest partielle Kunststoffumspritzung, aufweist.

7. Elektromotor nach einem der vorhergehenden Ansprüche, **dadurch gekennzeichnet, dass** das Kontaktgitter (64) ferner Kontakte (20d, 22d, 24d) zum Kontaktieren, insbesondere Direktkontaktieren, einer Motorsteuerung (18) aufweist.

8. Elektromotor nach einem der vorhergehenden Ansprüche, **dadurch gekennzeichnet, dass** das Kontaktgitter (64) Formelemente, aufweist, die zur Führung und Umlenkung des Wickeldrahtes (82) ausgebildet sind.

9. Elektromotor nach einem der vorhergehenden Ansprüche, **dadurch gekennzeichnet, dass** das Kontaktgitter (64) eine Öffnung (79) mit einem freien Durchgang, insbesondere einem Innendurchmesser (106), sowie einen Außendurchmesser (108) aufweist, und dass vorzugsweise ein Innendurchmesser-Außendurchmesser-Verhältnis von etwa 1:1,5 bis 1:2,5, weiter bevorzugt von 1:1,8 bis 1:2,0 vorgesehen ist.

10. Elektromotor nach Anspruch 9, **dadurch gekennzeichnet, dass** der Innendurchmesser (106) vorzugsweise im Wesentlichen einem Innendurchmesser (110) des Stators (60) des Elektromotors (16) entspricht und etwa 15 bis 30 mm, vorzugsweise 18 bis 24 mm, weiter bevorzugt ungefähr 22 mm beträgt.

11. Elektromotor nach einem der vorhergehenden Ansprüche, **dadurch gekennzeichnet, dass** die Erregerwicklungen (50, 52, 54) durchgehend aus dem Wickeldraht (82) gewickelt sind.

12. Elektromotor nach einem der vorhergehenden Ansprüche, **dadurch gekennzeichnet, dass** zumindest einige der Erregerwicklungen (50a, 50b, 50c; 52a, 52b, 52c; 54a, 54b, 54c) parallel geschaltet sind.

13. Verfahren zur Fertigung eines Elektromotors, insbesondere eines elektronisch kommutierbaren Elektromotors, mit den folgenden Schritten:
- Wickeln einer Mehrzahl von Erregerwicklungen (50, 52, 54) aus einem Wickeldraht (82) an einem Stator (60);
- Zuführen eines Kontaktgitters (64) mit einer Mehrzahl voneinander isolierter Leiterbahnen (66, 68, 70, 72) zum Stator (60) und mit Kontakten (20d, 22d, 24d) zum Kontaktieren einer Motorsteuerung (18);
- Festlegen des Wickeldrahtes (82) an Kontakten (20, 22, 24, 58) der Leiterbahnen (66, 68, 70, 72); und
- Durchtrennen des Wickeldrahtes (82) zwischen bestimmten Kontakten (20, 22, 24, 58), so dass sich eine Verschaltung der Mehrzahl von Erregerwicklungen (50, 52, 54) als Dreiecksschaltung oder Sternschaltung ergibt, die zum Erzeugen eines Drehfeldes geeignet ist;
- wobei das Kontaktgitter (64) mittels daran vorgesehener Nasen (76a, 76b, 76c, 76d) gegenüber der Motorsteuerung (18) ausgerichtet wird und mittels daran vorgesehener Nasen (76e, 76f) gegenüber dem Stator (60) ausgerichtet wird.

## Claims

1. Electric motor, more particularly electronically commutatable motor for a hand tool, having a stator (60) with a plurality of excitation windings (50, 52, 54) wound from a winding wire (82), having a contact grid (64) for making contact with said excitation windings (50, 52, 54), said contact grid having a plurality of conductor tracks (66, 68, 70, 72) insulated from one another, wherein said conductor tracks (66, 68, 70, 72) have contacts (20, 22, 24, 58) to which said winding wire (82) is fixed, wherein the winding wire (82) is severed between certain contacts (20, 22, 24, 58), such that an interconnection of the excitation windings (50, 52, 54) results in a star connection or a delta connection, which is suitable for generating a rotating field, wherein the contact grid (64) has moulded elements, in the form of tabs (76), recesses (78) or projections (80) for handling and for simplifying assembly, wherein the contact grid (64) has contacts (20d, 22d, 24d) for making contact with a motor controller (18), **characterised in that** some of the moulded elements are configured as tabs (76a, 76b, 76c, 76d) for alignment of the motor controller (18) with respect to the contact grid (64) and some of the moulded elements are configured as tabs (76e, 76f) for alignment of the contact grid (64) with respect to the stator (60).

2. Electric motor according to claim 1, **characterised in that** the conductor tracks (66, 68, 70, 72) are stamped or cut out of a flat conductive semi-finished product.

3. Electric motor according to claim 1 or 2, **characterised in that** the conductor tracks (66, 68, 70, 72) have an essentially annular base body (73), from which arms (74) project, on which the contacts (20, 22, 24, 58) are formed.

4. Electric motor according to any one of the preceding claims, **characterised in that** the contacts (20, 22, 24, 58) are configured for fixing said winding wire (82) by clamping and/or joining.

5. Electric motor according to any one of the preceding claims, **characterised in that** four conductor tracks (66, 68, 70, 72) are provided, three conductor tracks (68, 70, 72) of which are each configured for making contact with one phase (U, V, W) of the excitation windings (50, 52, 54) and the fourth conductor track (66) of which is configured as contact (58) of a star point.

6. Electric motor according to any one of the preceding claims, **characterised in that** the contact grid (64) has a support structure (75), more particularly an at least partial plastic insert moulding.

7. Electric motor according to any one of the preceding claims, **characterised in that** the contact grid (64) has furthermore contacts (20d, 22d, 24d) for making contact, more particularly for making direct contact, with a motor controller (18).

8. Electric motor according to any one of the preceding claims, **characterised in that** the contact grid (64) has moulded elements configured to guide and redirect the winding wire (82).

9. Electric motor according to any one of the preceding claims, **characterised in that** the contact grid (64) has an opening (79) with a free passage, more particularly an internal diameter (106), and also an external diameter (108), and that preferably an internal diameter/external diameter ratio of about 1:1.5 to 1:2.5, more preferably from 1:1.8 to 1:2.0, is provided.

10. Electric motor according to claim 9, **characterised in that** the internal diameter (106) preferably corresponds essentially to an internal diameter (110) of the stator (60) of the electric motor (16) and is about 15 to 30mm, preferably 18 to 24mm, and more preferably approximately 22mm.

11. Electric motor according to any one of the preceding claims, **characterised in that** the excitation windings (50, 52, 54) are wound continuously from the winding wire (82).

12. Electric motor according to any one of the preceding claims, **characterised in that** at least some of the excitation windings (50a, 50b, 50c; 52a, 52b, 52c; 54a, 54b, 54c) are connected in parallel.

13. Method for producing an electric motor, more particularly an electronically commutatable electric motor, comprising the following steps:
- winding of a plurality of excitation windings (50, 52, 54) from a winding wire (82) on a stator (60);
- feeding of a contact grid (64) having a plurality of conductor tracks (66, 68, 70, 72) insulated from one another to the stator (60) and having contacts (20d, 22d, 24d) for making contact with a motor controller (18);
- fixing of the winding wire (82) to contacts (20, 22, 24, 58) of the conductor tracks (66, 68, 70, 72); and
- severing of the winding wire (82) between certain contacts (20, 22, 24, 58), such that an interconnection of the plurality of excitation windings (50, 52, 54) results as delta connection or star connection, which is suitable for generating a rotating field;
- wherein the contact grid (64) is aligned with respect to the motor controller (18) by means of tabs (76a, 76b, 76c, 76d) provided thereon and is aligned with respect to the stator (60) by means of tabs (76e, 76f) provided thereon.

## Revendications

1. Moteur électrique, en particulier moteur à commutation électronique pour un outil manuel, avec un stator (60) avec une multitude d'enroulements d'excitation (50, 52, 54), qui sont enroulés à partir d'un fil d'enroulement (82), avec une grille de contact (64) servant à établir un contact avec les enroulements d'excitation (50, 52, 54), qui présente une multitude de pistes conductrices (66, 68, 70, 72) isolées les unes des autres, dans lequel les pistes conductrices (66, 68, 70, 72) présentent des contacts (20, 22, 24, 58), au niveau desquels le fil d'enroulement (82) est fixé, dans lequel le fil d'enroulement (82) entre des contacts (20, 22, 24, 58) définis est sectionné de telle manière qu'il en résulte un câblage des enroulements d'excitation (50, 52, 54) selon un branchement en étoile ou un branchement en triangle, qui est adapté pour générer un champ tournant, dans lequel la grille de contact (64) présente des éléments moulés, sous la forme d'ergots (76), d'évidements (78) ou de parties faisant saillie (80) servant à la manipulation et à la simplification de montage, dans lequel la grille de contact (64) présente des contacts (20d, 22d, 24d) servant à établir un contact avec une commande de moteur (18), **caractérisé en ce que**
certains des éléments moulés sont réalisés en tant qu'ergots (76a, 76b, 76cn 76d) servant à orienter la commande de moteur (18) par rapport à la grille de contact (64) et certains des éléments moulés sont réalisés sous la forme d'ergots (76e, 76f) servant à orienter la grille de contact (64) par rapport au stator (60).

2. Moteur électrique selon la revendication 1, **caractérisé en ce que** les pistes conductrices (66, 68, 70, 72) sont estampées ou découpées d'un produit semi-fini plat conducteur.

3. Moteur électrique selon la revendication 1 ou 2, **caractérisé en ce que** les pistes conductrices (66, 68, 70, 72) présentent un corps de base (73) sensiblement de forme annulaire, duquel des bras (74) dépassent, au niveau desquels les contacts (20, 22, 24, 58) sont réalisés.

4. Moteur électrique selon l'une quelconque des revendications précédentes, **caractérisé en ce que** les contacts (20, 22, 24, 58) sont réalisés pour serrer et/ou assembler aux fins de la fixation du fil d'enroulement (82).

5. Moteur électrique selon l'une quelconque des revendications précédentes, **caractérisé en ce que** quatre pistes conductrices (66, 68, 70, 72) sont prévues, dont trois pistes conductrices (68, 70, 72) sont réalisées respectivement aux fins de l'établissement d'un contact avec une phase (U, V, W) des enroulements d'excitation (50, 52, 54), et la quatrième piste conductrice (66) est réalisée sous la forme de contact (58) d'un point d'étoile.

6. Moteur électrique selon l'une quelconque des revendications précédentes, **caractérisé en ce que** la grille de contact (64) présente une structure de support (75), en particulier un surmoulage en matière plastique au moins partiel.

7. Moteur électrique selon l'une quelconque des revendications précédentes, **caractérisé en ce que** la grille de contact (64) présente en outre des contacts (20d, 22d, 24d) servant à établir un contact, en particulier un contact direct, avec une commande de moteur (18).

8. Moteur électrique selon l'une quelconque des revendications précédentes, **caractérisé en ce que** la grille de contact (64) présente des éléments moulés, qui sont réalisés pour guider et dévier le fil d'enroulement (82).

9. Moteur électrique selon l'une quelconque des revendications précédentes, **caractérisé en ce que** la grille de contact (64) présente une ouverture (79) avec un passage libre, en particulier un diamètre intérieur (106), ainsi qu'un diamètre extérieur (108), et que de préférence un rapport entre le diamètre intérieur et le diamètre extérieur d'environ 1:1,5 à 1:2,5, de manière davantage préférée de 1:1,8 à 1:2,0 est prévu.

10. Moteur électrique selon la revendication 9, **caractérisé en ce que** le diamètre intérieur (106) correspond de préférence sensiblement à un diamètre intérieur (110) du stator (60) du moteur électrique (16) et est égal à environ 15 à 30 mm, de préférence 18 à 24 mm, de manière davantage préférée d'environ 22 mm.

11. Moteur électrique selon l'une quelconque des revendications précédentes, **caractérisé en ce que** les enroulements d'excitation (50, 52, 54) sont enroulés en continu à partir du fil d'enroulement (82).

12. Moteur électrique selon l'une quelconque des revendications précédentes, **caractérisé en ce qu'**au moins certains des enroulements d'excitation (50a, 50b, 50c ; 52a, 52b, 52c ; 54a, 54b, 54c) sont branchés de manière parallèle.

13. Procédé servant à produire un moteur électrique, en particulier un moteur électrique à commutation électronique, avec les étapes suivantes :
- enroulement d'une multitude d'enroulements d'excitation (50, 52, 54) composés d'un fil d'enroulement (82) au niveau d'un stator (60) ;
- amenée d'une grille de contact (64) avec une multitude de pistes conductrices (66, 68, 70, 72) isolées les unes des autres vers le stator (60) et avec des contacts (20d, 22d, 24d) servant à établir un contact avec une commande de moteur (18) ;
- fixation du fil d'enroulement (82) au niveau de contacts (20, 22, 24, 58) des pistes conductrices (66, 68, 70, 72) ; et
- sectionnement du fil d'enroulement (82) entre des contacts (20, 22, 24, 58) définis de sorte qu'il en résulte un câblage de la multitude d'enroulements d'excitation (50, 52, 54) en tant que branchement en triangle ou branchement en étoile, qui est adapté aux fins de la production d'un champ tournant ;
- dans lequel la grille de contact (64) est orientée au moyen d'ergots (76a, 76b, 76c, 76d) prévus au niveau de cette dernière par rapport à la commande de moteur (18) et est orientée par rapport au stator (60) au moyen d'ergots (76e, 76f) prévus au niveau de la commande de moteur.
